(19) **Europäisches Patentamt**
**European Patent Office**
**Office européen des brevets**

(11) **EP 4 266 603 A1**

(12) **EUROPEAN PATENT APPLICATION**
published in accordance with Art. 153(4) EPC

(43) Date of publication:
**25.10.2023 Bulletin 2023/43**

(21) Application number: **21926356.3**

(22) Date of filing: **19.11.2021**

(51) International Patent Classification (IPC):
***H04B 17/391*** (2015.01)    ***H04L 25/02*** (2006.01)

(52) Cooperative Patent Classification (CPC):
**H04B 17/391; H04L 25/02;** Y02D 30/70

(86) International application number:
**PCT/CN2021/131856**

(87) International publication number:
**WO 2022/174642 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.02.2021 CN 202110197721**

(71) Applicant: **Huawei Technologies Co., Ltd.
Shenzhen, Guangdong 518129 (CN)**

(72) Inventors:
• **ZHONG, Caijun**
  **Hangzhou, Zhejiang 310013 (CN)**
• **GAO, Jiabao**
  **Hangzhou, Zhejiang 310013 (CN)**
• **YU, Tianhang**
  **Shenzhen, Guangdong 518129 (CN)**
• **ZHANG, Gongzheng**
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54) **SPACE DIVISION-BASED DATA PROCESSING METHOD AND COMMUNICATION DEVICE**

(57) This application provides a space division-based data processing method and a communication apparatus. The method includes: A first device obtains a first signal from a second device; and the first device infers the first signal based on a first model to obtain first channel information, where the second device is in a first coverage area of a plurality of coverage areas of the first device, and the first model is a channel information inference model corresponding to the first coverage area. This can improve communication reliability.

300

```
┌──────────────────────────────────────┐
│ S310: Obtain a first signal from a   │
│        second device                 │
└──────────────────────────────────────┘
                  │
                  ▼
┌──────────────────────────────────────┐
│ S320: Infer the first signal based   │
│ on a first model to obtain first     │
│ channel information                  │
└──────────────────────────────────────┘
```

FIG. 3

**Description**

This application claims priority to Chinese Patent Application No. 202110197721.6, filed with the China National Intellectual Property Administration on February 22, 2021 and entitled "SPACE DIVISION-BASED DATA PROCESSING METHOD AND COMMUNICATION APPARATUS", which is incorporated herein by reference in its entirety.

**TECHNICAL FIELD**

This application relates to the communication field, and more specifically, to a space division-based data processing method and a communication apparatus.

**BACKGROUND**

As one of core technologies of the 5th generation mobile communication, a massive antenna technology has many advantages, such as high spectral efficiency, high energy efficiency, and high reliability. To reduce hardware and energy consumption overheads, in practice, a massive antenna system usually uses a hybrid analog-digital architecture in which a quantity of radio frequency links configured at a base station end is less than a quantity of antennas. A received signal at an antenna is processed in an analog domain that includes a phase shifter, and then processed in a digital domain. A massive antenna application brings great challenges to signal processing.

**SUMMARY**

This application provides a space division-based data processing method and a communication apparatus. This can improve communication reliability.

According to a first aspect, a communication method is provided. The method may be performed by a first device or a module (for example, a chip) configured in (or used in) the first device. The following uses an example in which the method is performed by a network device for description.

The method includes: The first device obtains a first signal from a second device; and the first device infers the first signal based on a first model to obtain first channel information, where the second device is in a first coverage area of a plurality of coverage areas of the first device, and the first model is a channel information inference model corresponding to the first coverage area.

According to the foregoing solution, coverage of a signal receiving device is divided into a plurality of coverage areas, and the signal receiving device infers, based on a coverage area in which a signal sending device is located, a received signal by using an artificial intelligence inference model corresponding to the coverage area, to obtain channel information. This can improve signal receiving accuracy, and therefore improve communication reliability.

With reference to the first aspect, in some implementations of the first aspect, the first channel information is angle domain channel information.

According to the foregoing solution, a structural sparse feature of an angle domain channel is used, so that channel data processing performance may be improved, and estimation overheads may be reduced.

With reference to the first aspect, in some implementations of the first aspect, the inferring the first signal based on a first model to obtain first channel information includes: obtaining measurement information through inference based on the first model; processing the first signal based on the measurement information to obtain a second signal; and inferring the second signal based on the first model to obtain the first channel information.

According to the foregoing solution, the first device may infer, based on the first model, measurement information used to measure the signal, and further obtain, through inference based on the first model, information about a channel through which the signal passes. Therefore, channel estimation performance can be improved, and estimation overheads can be reduced.

With reference to the first aspect, in some implementations of the first aspect, the first model is an autoencoder model, the first model includes an encoder part and a decoder part, and the obtaining measurement information through inference based on the first model includes: The first device obtains the measurement information through inference based on the encoder part, and the obtaining measurement information through inference based on the first model includes: the first device infers the second signal based on the decoder part to obtain the first channel information.

With reference to the first aspect, in some implementations of the first aspect, the method further includes: The first device obtains a training signal set corresponding to the first coverage area, where the first training set includes a plurality of training signals; and the first device trains a training model based on the training signal set to obtain the first model.

According to the foregoing solution, the first device trains channel information models of different coverage areas based on training data in a channel environment. This increases a matching degree between a model and a coverage area, and improves accuracy of channel estimation performed by the model.

With reference to the first aspect, in some implementations of the first aspect, the training model includes an encoder part and a decoder part, and the training a training model based on the training signal set includes: inputting an angle domain channel information sample in the first training set into the encoder part, to obtain a target encoded signal; inputting the target encoded signal into the decoder part, to obtain a target decoded signal; obtaining parameter information of the training model based on an angle domain channel information label and the target decoded signal; and adjusting a parameter of the encoder part and a parameter of the decoder part based on the parameter information. With reference to the first aspect, in some implementations of the first aspect, one coverage area of the plurality of coverage areas belongs to a sector covered by a center angle using the first device as a center of a circle, the first coverage area belongs to a sector covered by a first center angle, and any two coverage areas of the plurality of coverage areas belong to different sectors, or distances between any two coverage areas of the plurality of coverage areas and the first device are different.

According to the foregoing solution, because environmental data of similar locations is usually correlated, similar areas are divided into a same coverage area. Corresponding channel information inference models are used based on different coverage areas, so that accuracy of obtaining channel information can be improved, to restore a received signal accurately.

With reference to the first aspect, in some implementations of the first aspect, the method further includes: The first device obtains location information from the second device; and the first device determines, based on the location information, that the second device is in the first coverage area.

According to the foregoing solution, the first device may determine, based on the location information sent by the second device, that the second device is in the first coverage area, to process an obtained signal from the second device based on the first model corresponding to the first coverage area. This improves accuracy of channel estimation, and therefore improves communication reliability.

With reference to the first aspect, in some implementations of the first aspect, the method further includes: The first device sends first indication information, where the first indication information indicates the plurality of coverage areas, and the plurality of coverage areas correspond to a plurality of channel information inference models; and the first device obtains second indication information, where the second indication information indicates that the second device is in the first coverage area or indicate the first model.

According to the foregoing solution, the first device may notify the second device of the plurality of coverage areas based on the first indication information, and the second device determines the first coverage area to which the second device belongs, and notifies the first device based on the second indication information, so that the first device may process the obtained signal from the second device based on the first model corresponding to the first coverage area. This improves accuracy of channel estimation, and therefore improves communication reliability.

With reference to the first aspect, in some implementations of the first aspect, the first indication information is broadcast information.

With reference to the first aspect, in some implementations of the first aspect, the first device is a network device or a terminal device.

According to a second aspect, a communication method is provided. The method may be performed by a second device or a module (for example, a chip) configured in (or used in) the second device. The following uses an example in which the method is performed by a terminal device for description.

The method includes: The second device obtains first indication information, where the first indication information indicates a plurality of coverage areas, and the plurality of coverage areas correspond to a plurality of channel information inference models; and the second device sends second indication information, where the second indication information indicates that the second device is in a first coverage area or indicate a first model, the first coverage area is one of the plurality of coverage areas, and the first model is a model corresponding to the first coverage area.

With reference to the second aspect, in some implementations of the second aspect, one coverage area of the plurality of coverage areas belongs to a sector covered by a center angle using a first device as a center of a circle, the first coverage area belongs to a sector covered by a first center angle, and two coverage areas of the plurality of coverage areas belong to different sectors, or distances between two coverage areas of the plurality of coverage areas and the first device are different.

With reference to the second aspect, in some implementations of the second aspect, the first indication information includes one or more of the following items: reference location information of each coverage area of the plurality of coverage areas, identification information of each coverage area of the plurality of coverage areas, or identification information of each model of the plurality of channel information inference models.

With reference to the second aspect, in some implementations of the second aspect, the second indication information includes identification information of the first coverage area or identification information of the first model.

According to a third aspect, a communication apparatus is provided. The apparatus is a first device or a module (for example, a chip) configured in (or used in) the first device.

The communication apparatus includes: a transceiver unit, configured to obtain a first signal from a second device; and

a processing unit, configured to infer the first signal based on a first model to obtain first channel information, where the second device is in a first coverage area of a plurality of coverage areas of the first device, and the first model is a channel information inference model corresponding to the first coverage area.

With reference to the third aspect, in some implementations of the third aspect, the first channel information is angle domain channel information.

With reference to the third aspect, in some implementations of the third aspect, the processing unit is specifically configured to: obtain measurement information through inference based on the first model; process the first signal based on the measurement information to obtain a second signal; and infer the second signal based on the first model to obtain the first channel information.

With reference to the third aspect, in some implementations of the third aspect, the first model is an autoencoder model, the first model includes an encoder part and a decoder part, and the processing unit is specifically configured to: obtain the measurement information through inference based on the encoder part, and infer the second signal based on the decoder part to obtain the first channel information.

With reference to the third aspect, in some implementations of the third aspect, before the transceiver unit obtains the first signal from the second device, the transceiver unit is further configured to obtain a first training set of the first coverage area, where the first training set includes a plurality of training signals; and the processing unit is further configured to train a training model based on the first training set to obtain the first model.

With reference to the third aspect, in some implementations of the third aspect, the training model includes an encoder part and a decoder part, and the processing unit is specifically configured to:

input an angle domain channel information sample in the first training set into the encoder part, to obtain a target encoded signal; input the target encoded signal into the decoder part, to obtain a target decoded signal; obtain parameter information of the training model based on an angle domain channel information label and the target decoded signal; and adjust a parameter of the encoder part and a parameter of the decoder part based on the parameter information.

With reference to the third aspect, in some implementations of the third aspect, one coverage area of the plurality of coverage areas belongs to a sector covered by a center angle using the first device as a center of a circle, the first coverage area belongs to a sector covered by a first center angle, and any two coverage areas of the plurality of coverage areas belong to different sectors, or distances between any two coverage areas of the plurality of coverage areas and the first device are different.

With reference to the third aspect, in some implementations of the third aspect, the transceiver unit is further configured to obtain location information from the second device; and the processing unit is further configured to determine, based on the location information, that the second device is in the first coverage area.

According to a fourth aspect, a communication apparatus is provided. The apparatus is a second device or a module (for example, a chip) configured in (or used in) the second device.

The communication apparatus includes: a transceiver unit, configured to obtain first indication information, where the first indication information indicates a plurality of coverage areas, and the plurality of coverage areas correspond to a plurality of channel information inference models; and a processing unit, configured to determine, based on the first indication information, that the second device is in a first coverage area of the plurality of coverage areas, where the transceiver unit is further configured to send second indication information, where the second indication information indicates that the second device is in the first coverage area or indicate a first model, and the first model is a model corresponding to the first coverage area.

With reference to the fourth aspect, in some implementations of the fourth aspect, one coverage area of the plurality of coverage areas belongs to a sector covered by a center angle using a first device as a center of a circle, the first coverage area belongs to a sector covered by a first center angle, and two coverage areas of the plurality of coverage areas belong to different sectors, or distances between two coverage areas of the plurality of coverage areas and the first device are different.

With reference to the fourth aspect, in some implementations of the fourth aspect, the first indication information includes one or more of the following items:

reference location information of each coverage area of the plurality of coverage areas, identification information of each coverage area of the plurality of coverage areas, or identification information of each model of the plurality of channel information inference models.

With reference to the fourth aspect, in some implementations of the fourth aspect, the second indication information includes identification information of the first coverage area or identification information of the first model.

According to a fifth aspect, a communication apparatus is provided. The communication apparatus includes a processor. The processor may implement the method according to any one of the first aspect and the possible implementations of the first aspect.

Optionally, the communication apparatus further includes a memory. The processor is coupled to the memory, and may be configured to execute instructions in the memory, to implement the method according to any one of the first aspect and the possible implementations of the first aspect. Optionally, the communication apparatus further includes a communication interface, and the processor is coupled to the communication interface. In this embodiment of this application, the communication interface may be a transceiver, a pin, a circuit, a bus, a module, or another type of communication interface. This is not limited.

In an implementation, the communication apparatus is a first device. When the communication apparatus is the first device, the communication interface may be a transceiver or an input/output interface.

In another implementation, the communication apparatus is a chip configured in a first device. When the communication apparatus is the chip configured in the first device, the communication interface may be an input/output interface, and the processor may be a logic circuit.

The input/output interface is configured to input a first signal from a second device; and the logic circuit is configured to infer the first signal based on a first model to obtain first channel information, where the second device is in a first coverage area of a plurality of coverage areas of the first device, and the first model is a channel information inference model corresponding to the first coverage area.

Optionally, the transceiver may be a transceiver circuit. Optionally, the input/output interface may be an input/output circuit.

According to a sixth aspect, a communication apparatus is provided. The communication apparatus includes a processor. The processor may implement the method according to any one of the second aspect and the possible implementations of the second aspect. Optionally, the communication apparatus further includes a memory. The processor is coupled to the memory, and may be configured to execute instructions in the memory, to implement the method according to any one of the second aspect and the possible implementations of the second aspect. Optionally, the communication apparatus further includes a communication interface, and the processor is coupled to the communication interface.

In an implementation, the communication apparatus is a second device. When the communication apparatus is the second device, the communication interface may be a transceiver or an input/output interface.

In another implementation, the communication apparatus is a chip configured in a second device. When the communication apparatus is the chip configured in the second device, the communication interface may be an input/output interface, and the processor may be a logic circuit.

The input/output interface is configured to input first indication information, where the first indication information indicates a plurality of coverage areas, and the plurality of coverage areas correspond to a plurality of channel information inference models; the logic circuit is configured to determine, based on the first indication information, that the second device is in a first coverage area of the plurality of coverage areas; and the input/output interface is further configured to output second indication information, where the second indication information indicates that the second device is in the first coverage area or indicate a first model, and the first model is a model corresponding to the first coverage area. Optionally, the transceiver may be a transceiver circuit.

Optionally, the input/output interface may be an input/output circuit.

According to a seventh aspect, a processor is provided. The processor includes an input circuit, an output circuit, and a processing circuit. The processing circuit is configured to: receive a signal through the input circuit, and transmit a signal through the output circuit, so that the processor performs the method according to any one of the first aspect or the second aspect and the possible implementations of the first aspect or the second aspect.

In a specific implementation process, the processor may be one or more chips, the input circuit may be an input pin, the output circuit may be an output pin, and the processing circuit may be a transistor, a gate circuit, a flip-flop, various logic circuits, and the like. An input signal received by the input circuit may be received and input by, for example, but not limited to, a receiver. A signal output by the output circuit may be output to and transmitted by, for example, but not limited to, a transmitter. The input circuit and the output circuit may be a same circuit, where the circuit serves as an input circuit and an output circuit respectively at different moments. Specific implementations of the processor and various circuits are not limited in this embodiment of this application.

According to an eighth aspect, a computer program product is provided. The computer program product includes a computer program (which may also be referred to as code or instructions). When the computer program is run, a computer is enabled to perform the method according to any one of the first aspect or the second aspect and the possible implementations of the first aspect or the second aspect.

According to a ninth aspect, a computer-readable storage medium is provided. The computer-readable storage medium stores a computer program (which may also be referred to as code or instructions). When the computer program is run on a computer, the computer is enabled to perform the method according to any one of the first aspect or the second aspect and the possible implementations of the first aspect or the second aspect.

According to a tenth aspect, a communication system is provided. The communication system includes the foregoing at least one first device and at least one second device.

For technical effects that may be achieved by any one of the second aspect to the tenth aspect and any possible implementation of any one of the second aspect to the tenth aspect, refer to descriptions of technical effects that may be achieved by the first aspect and corresponding implementations of the first aspect. Details are not described herein again.

**BRIEF DESCRIPTION OF DRAWINGS**

FIG. 1 is a schematic architecture of a communication system to which embodiments of this application are applicable;
FIG. 2 is a schematic diagram of a hybrid analog-digital architecture for a massive antenna system according to this application;
FIG. 3 is a schematic flowchart of a communication method according to an embodiment of this application;
FIG. 4 is a schematic diagram of an autoencoder model training process according to an embodiment of this application;
FIG. 5 is a schematic diagram of a plurality of coverage areas of a first device according to an embodiment of this application;
FIG. 6 is another schematic diagram of a plurality of coverage areas of a first device according to an embodiment of this application;
FIG. 7 is another schematic diagram of a plurality of coverage areas of a first device according to an embodiment of this application;
FIG. 8 is another schematic flowchart of a communication method according to an embodiment of this application;
FIG. 9 is a schematic block diagram of an example of a communication apparatus according to this application; and
FIG. 10 is a schematic diagram of a structure of an example of a communication device according to this application.

**DESCRIPTION OF EMBODIMENTS**

The following describes technical solutions of this application with reference to accompanying drawings.
The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, a future communication system (for example, a 6th generation (6th generation, 6G) communication system), or a system integrating a plurality of communication systems. This is not limited in embodiments of this application. 5G may also be referred to as new radio (new radio, NR).

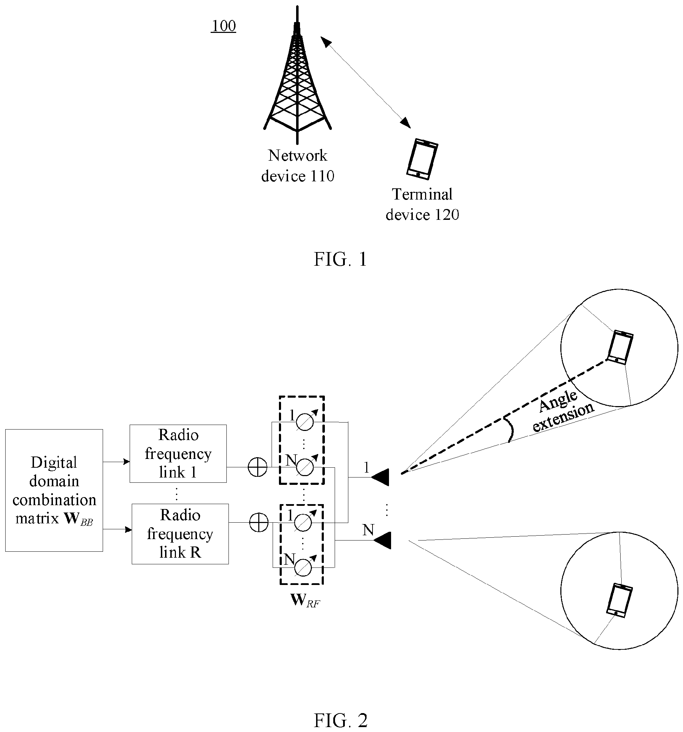

FIG. 1 is a schematic diagram of a communication system 100 to which embodiments of this application are applicable.
The communication system to which embodiments of this application are applicable may include at least one network device, for example, a network device 110 in the communication system 100 shown in FIG. 1. The wireless communication system may further include at least one terminal device, for example, a terminal device 120 in the communication system 100 shown in FIG. 1. The network device 110 and the terminal device 120 may communicate with each other through a radio link. The network device 110 may process a signal from the terminal device 120 by using a communication method provided in this application. In addition, the terminal device 120 may also process a signal from the network device 110 by using the communication method provided in this application. This is not limited in this application.
The technical solutions provided in embodiments of this application may be applied to various communication scenarios, for example, may be applied to one or more of the following communication scenarios: enhanced mobile bandwidth (enhanced mobile broadband, eMBB) communication, ultra-reliable low-latency communication (ultra-reliable low-latency communication, URLLC), machine type communication (machine type communication, MTC), massive machine type communication (massive machine type communication, mMTC), device to device (device to device, D2D) communication, vehicle to everything (vehicle to everything, V2X) communication, vehicle to vehicle (vehicle to vehicle, V2V) communication, vehicle to network (vehicle to network, V2N), vehicle to infrastructure (vehicle to infrastructure, V2I), vehicle to pedestrian (vehicle to pedestrian, V2P), internet of things (internet of things, IoT), unmanned aerial vehicle communication, satellite communication, and the like. Optionally, mMTC may include one or more of the following communication: communication in an industrial wireless sensor network (industrial wireless sensor network, IWSN), communication in a video surveillance (video surveillance) scenario, communication of a wearable device, and the like.
The technical solutions provided in embodiments of this application may be applied to communication between communication devices. The communication between the communication devices may include communication between a network device and a terminal device, communication between network devices, and/or communication between terminal devices. In embodiments of this application, the term "communication" may also be described as "transmission", "information transmission", "signal transmission", or the like. The transmission may include sending and/or receiving. The communication between the network device and the terminal device is used as an example to describe the technical solutions in embodiments of this application. A person skilled in the art may also use the technical solutions to perform communication between another scheduling entity and another subordinate entity, for example, communication between a macro base station and a micro base station, and communication between a first terminal device and a second terminal device. The scheduling entity may allocate a radio resource such as an air interface resource to the subordinate entity. The air interface resource includes one or more of the following resources: a time domain resource, a frequency domain resource, a code resource, and a spatial resource.

In embodiments of this application, the communication between the network device and the terminal device includes: The network device sends a downlink signal to the terminal device, and/or the terminal device sends an uplink signal to the network device. The signal may also be replaced with information, data, or the like.

The terminal device in embodiments of this application may also be referred to as a terminal. The terminal may be a device having a wireless transceiver function. The terminal may be deployed on land, where the deployment includes indoor, outdoor, handheld, and/or vehicle-mounted deployment; or may be deployed on a water surface (for example, on a ship); or may be deployed in air (for example, on an aircraft, a balloon, or a satellite). The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), and/or the like.

The network device in embodiments of this application includes a base station (base station, BS), and may be a device that is deployed in a radio access network and that can perform wireless communication with the terminal device. The base station may include a plurality of forms, for example, a macro base station, a micro base station, a relay station, or an access point. The base station in embodiments of this application may be a base station in a 5G system, a base station in an LTE system, or a base station in another system. This is not limited. The base station in the 5G system may also be referred to as a transmission reception point (transmission reception point, TRP) or a next generation NodeB (generation NodeB, gNB or gNodeB). The base station may be an integrated base station, or may be a base station that is separated into a plurality of network elements. This is not limited. For example, the base station is a base station in which a central unit (central unit, CU) and a distributed unit (distributed unit, DU) are separated. In other words, the base station includes the CU and the DU.

In embodiments of this application, an apparatus configured to implement a function of the terminal device may be a terminal device, or may be an apparatus capable of supporting the terminal device in implementing the function, for example, a chip system.

The apparatus may be mounted in the terminal device or may be matched with the terminal device for use. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal device is the terminal device.

In embodiments of this application, an apparatus configured to implement a function of the network device may be a network device, or may be an apparatus capable of supporting the network device in implementing the function, for example, a chip system. The apparatus may be mounted in the network device or may be matched with the network device for use. In the technical solutions provided in embodiments of this application, the technical solutions provided in embodiments of this application are described by using an example in which the apparatus configured to implement the function of the network device is the network device.

In embodiments of this application, "/" may represent an "or" relationship between associated objects. For example, A/B may represent A or B. The term "and/or" may be used to indicate that there are three relationships between associated objects. For example, A and/or B may represent the following three cases: Only A exists, both A and B exist, and only B exists, where A and B may be singular or plural. To facilitate description of the technical solutions in embodiments of this application, in embodiments of this application, terms such as "first" and "second" may be used to distinguish between technical features with same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

In embodiments of this application, "at least one (type)" may alternatively be described as "one (type) or more (types)", and "a plurality of (types)" may be two (types), three (types), four (types), or more (types). This is not limited in embodiments of this application.

To meet high performance requirements on a mobile communication system, it may be considered that artificial intelligence (artificial intelligence, AI) is applied to a mobile communication network to improve performance of the mobile communication network. For example, an autoencoder (autoencoder) may be applied to an end-to-end (for example, a network device and a terminal device) neural network. The autoencoder may perform joint optimization on a transmitting end and a receiving end to improve overall performance. For example, the network device and the terminal device may jointly train neural networks on both sides to obtain a better algorithm. Therefore, how to make the artificial intelligence run effectively in the mobile communication network is a problem worth studying.

To better understand embodiments of this application, terms used in this application are briefly described below.

1. Artificial intelligence (artificial intelligence, AI)

The artificial intelligence AI enables a machine to have a learning ability and accumulate experience, so that the machine may resolve a problem, such as natural language understanding, image recognition, and/or chess playing, that may be resolved by humans through experience.

2. Neural network (neural network, NN): As an important branch of artificial intelligence, the neural network is a network structure that simulates a behavior feature of an animal neural network for information processing. A structure of the neural network includes a large quantity of nodes (or referred to as neurons) connected to each other. Based on a specific operational model, the neural network learns and trains input information, to process information. One neural network includes an input layer, a hidden layer, and an output layer. The input layer is responsible for receiving an input signal, the output layer is responsible for outputting a calculation result of the neural network, and the hidden layer is responsible for a complex function such as feature expression. The function of the hidden layer is represented by a weight matrix and a corresponding activation function.

A deep neural network (deep neural network, DNN) usually has a multi-layer structure. Increasing a depth and a width of the neural network may improve an expressive capability of the neural network, and provide more powerful information extraction and abstract modeling capabilities for a complex system. The depth of the neural network may be represented as a quantity of layers of the neural network. For one layer, the width of the neural network may be represented as a quantity of neurons included in the layer. There may be a plurality of construction manners of the DNN, for example, including but not limited to, a recurrent neural network (recurrent neural network, RNN), a convolutional neural network (convolutional neural network, CNN), and a fully connected neural network.

3. Training (training) or learning

The training refers to a process of processing a model (or referred to as a training model). In this processing process, a parameter, such as a weighted value, in the model is optimized, so that the model learns to perform a specific task. Embodiments of this application are applicable to but are not limited to one or more of the following training methods: supervised learning, unsupervised learning, reinforcement learning, transfer learning, and the like. The supervised learning uses a set of training samples that have been correctly labeled for training. Having been correctly labeled means that each sample has an expected output value. A difference from the supervised learning is that the unsupervised learning is a method that automatically classifies or groups input data without giving a pre-marked training sample.

4. Inference

The inference refers to performing data processing by using a trained model (where the trained model may be referred to as an inference model). Actual data is input into the inference model for processing, to obtain a corresponding inference result. The inference may also be referred to as prediction or decision-making, and the inference result may also be referred to as a prediction result, a decision result, or the like.

FIG. 2 is a schematic diagram of a hybrid analog-digital architecture for a massive antenna system according to this application. For example, an architecture for an antenna system shown in FIG. 2 is configured in a network device. A uniform linear array (uniform linear array, ULA) of N antennas is configured at a front end of the antenna system, a quantity R of back-end radio frequency links is far less than a quantity N of antennas, and the network device simultaneously serves K terminal devices by using the antenna system. When the network device performs estimation of an uplink channel from a terminal device to the network device, after the network device performs analog domain and digital domain processing on a signal received by the antenna array, a processed received signal Y obtained is:

$$\mathbf{Y} = \mathbf{W}_{BB}\mathbf{W}_{RF}\sum_{k=1}^{K}\mathbf{h}_k\mathbf{p}_k + \mathbf{N}$$

$\mathbf{W}_{BB}$ is a digital domain combination matrix, and a size is $R \times R$. $\mathbf{W}_{RF}$ is an analog domain combination matrix, and a size is $R \times N$. $\mathbf{N}$ is additive white Gaussian noise. $\mathbf{p}_k$ is a pilot sequence sent by a $k^{th}$ terminal device, a size is $1 \times L_p$, and $L_p$ is a length of the pilot sequence. $\mathbf{h}_k$ is an uplink channel from the $k^{th}$ terminal device to the network device, and a size is $N \times 1$. A channel is formed by superposition of a plurality of paths:

$$h = \frac{1}{\sqrt{N_p}} \sum\nolimits_{i=1}^{N_p} \alpha_i a\left(\theta_i\right)$$

$N_p$ is a quantity of paths, $\alpha_i$ is a complex gain of an $i^{th}$ path, and $\theta_i$ is an angle of arrival of the $i^{th}$ path to the network device. When an antenna spacing is half-wavelength, an array response vector of the ULA is $a(\theta)=[1 \; e^{j\pi\sin(\theta)} \; ... \; e^{j\pi\sin(\theta)(N-1)}]^T$.

In practice, the network device is usually at a high altitude and has a small quantity of surrounding scattering objects, and an angle extension (a half of a difference between a maximum incident angle and a minimum incident angle) of an incident signal from the terminal device to the network device is small. Therefore, angle domain channel information has a structural sparse feature. Specifically, a quantity of non-zero elements in the angle domain channel information is far less than a quantity of antennas, and is concentrated in a small range. This structural sparse feature is used to improve channel data processing performance. For example, this structural sparse feature may help improve channel estimation performance and reduce estimation overheads. The angle domain channel information may be obtained by performing discrete fourier transform (discrete fourier transform, DFT) on an original channel:

$$\mathbf{x} = \mathbf{B}^H \mathbf{h}$$

$\mathbf{x}$ and $\mathbf{h}$ respectively represent the angle domain channel information and the original channel, and $\mathbf{B}$ is a normalized DFT matrix. In addition, pilot sequences between terminal devices are orthogonal to each other, that is, when $i \neq j$, $\mathbf{p}_i \mathbf{p}_j^H = 0$; and when $i = j$, $\mathbf{p}_i \mathbf{p}_j^H = L_p$. Therefore, a received signal corresponding to a normalized sent signal of the $k^{th}$ terminal device may be extracted:

$$\mathbf{y}_k = \frac{\mathbf{Y}\mathbf{p}_k^H}{L_p} = \mathbf{\Phi}\mathbf{x}_k + \tilde{\mathbf{n}}_k$$

$\mathbf{\Phi} = \mathbf{W}_{BB}\mathbf{W}_{RF}\mathbf{B}$ is referred to as a measurement matrix, and $\tilde{\mathbf{n}}_k = \mathbf{W}_{BB}\mathbf{W}_{RF}\mathbf{N}\mathbf{p}_k^H / L_p$ is equivalent noise. Therefore, in the hybrid analog-digital architecture, channel estimation of the massive antenna system is to design the appropriate measurement matrix $\mathbf{\Phi}$ and a channel estimation algorithm and estimate angle domain channel information $\hat{\mathbf{x}}_k$ based on the received signal $\mathbf{y}_k$, so that an error between the angle domain channel information $\hat{\mathbf{x}}_k$ and real angle domain channel information $\mathbf{x}_k$ is as small as possible.

According to this application, coverage of a signal receiving device is divided into a plurality of coverage areas by using the sparse feature of the angle domain channel information, and the signal receiving device infers, based on a coverage area in which a signal sending device is located, the received signal by using an artificial intelligence inference model corresponding to the coverage area, to obtain channel information. This can improve signal receiving accuracy, and therefore improve communication reliability.

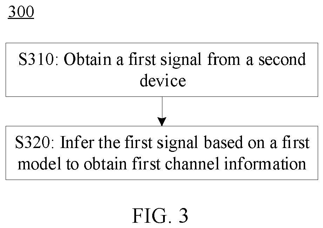

FIG. 3 is a schematic flowchart of a communication method 300 according to an embodiment of this application. The communication method shown in FIG. 3 is performed by a first device or an apparatus configured in the first device. The following uses an example in which the communication method is performed by the first device for description. The first device is a signal receiving device, and may be a network device or a terminal device. This is not limited in this application.

S310: The first device obtains a first signal from a second device.

For example, the second device sends a reference signal (where the reference signal may also be referred to as a pilot signal) to the first device, and the first device may receive and obtain, through an array antenna, the reference signal that is transmitted through a channel, where the reference signal that is transmitted through the channel is the first signal. However, this application is not limited thereto.

S320: The first device infers the first signal based on a first model to obtain first channel information.

Coverage of the first device is divided into a plurality of coverage areas, and each coverage area of the plurality of coverage areas corresponds to one channel information inference model. The second device is in a first coverage area of the plurality of coverage areas of the first device. The first model is a channel information inference model corresponding to the first coverage area. Because environmental data of similar locations is usually correlated, corresponding channel information inference models are used based on different coverage areas, so that accuracy of obtaining channel information can be improved, to restore a received signal accurately. The plurality of coverage areas may be a plurality of coverage areas in a same cell, or may be coverage areas in a plurality of cells. This is not limited in this application.

By way of an example but not limitative descriptions, the first channel information is angle domain channel information.

Optionally, that the first device infers the first signal based on a first model to obtain first channel information may specifically include: The first device obtains measurement information through inference based on the first model, and then processes the first signal based on the measurement information to obtain a second signal. After obtaining the second signal, the first device infers the second signal based on the first model to obtain the first channel information.

Optionally, the first model may be a neural network model.

For example, the first model is an autoencoder model in the neural network model, and the autoencoder model includes an encoder part and a decoder part. Specifically, the first device may obtain a measurement matrix $\Phi$ (namely, an example of the measurement information) through inference based on the encoder part of the first model, and obtain, based on the following formula, a digital combination matrix $\mathbf{W}_{BB}$ based on the measurement matrix $\Phi$:

$$\mathbf{W}_{BB} = \mathbf{\Phi}\left(\mathbf{W}_{RF}\mathbf{B}\right)^{\dagger}$$

$\mathbf{W}_{BB}$ is a digital domain combination matrix for processing a signal of the first coverage area. $(\mathbf{W}_{RF}\mathbf{B})^{\dagger}$ represents a pseudo-inverse matrix of $\mathbf{W}_{RF}\mathbf{B}$, and may be, for example, a moore-penrose (moore-penrose) pseudo-inverse matrix. However, this application is not limited thereto. An analog domain combination matrix $\mathbf{W}_{RF}$ is determined by a phase of a phase shifter, and shared by phase shifters that receive signals from various communication devices. Therefore, when the first device uses an omnidirectional antenna, $\mathbf{W}_{RF}$ may be any full-row-rank matrix. Alternatively, when the first device uses a non-omnidirectional antenna, $\mathbf{W}_{RF}$ may be an analog domain combination matrix corresponding to a trained analog domain beam. The first device receives the first signal, processes the first signal through the phase shifter, and processes the first signal by using $\mathbf{W}_{BB}$ that is obtained based on the measurement matrix $\Phi$, to obtain the second signal. Then, the first device infers the second signal based on the decoder part of the first model, to obtain estimated angle domain channel information $\hat{\mathbf{x}}$. According to this solution, the received first signal is inferred by using a model corresponding to the first coverage area. This can improve accuracy of angle channel estimation. A data signal is decoded based on the highly-accurate angle domain channel information, to reduce a probability of decoding failure and improve communication reliability.

In an implementation, the channel information inference models corresponding to the plurality of coverage areas of the first device may be preconfigured in the first device.

In another implementation, before S320, the first device trains a training model by using a training signal, to obtain a trained training model, and the trained training model is the foregoing inference model.

The following uses a model training process of the first coverage area as an example for description. For a model training process corresponding to another coverage area, refer to the model training process of the first coverage area. In this implementation, first, the first device may collect a first training signal set used for training. The first training signal set includes a plurality of training signals, and each training signal includes data and a label. The data may also be referred to as a sample. The data may be angle domain channel information with noise. The label is angle domain channel information used to calculate output precision of the training model. The angle domain channel information may be obtained through calculation based on an actual received signal of the first device, where the actual received signal is a signal that is received from and sent by a communication device in the first coverage area, or may be a signal obtained through computer simulation and synthesis based on a channel model of the first coverage area. However, this application is not limited thereto.

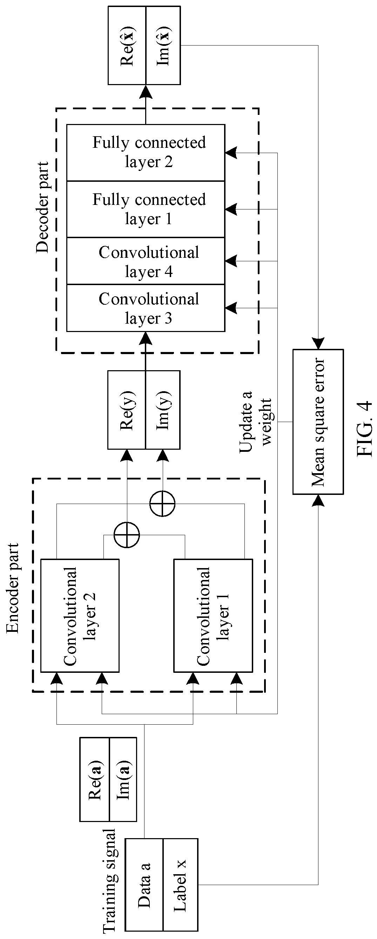

FIG. 4 is a schematic diagram of an autoencoder model training process according to an embodiment of this application.

An autoencoder model shown in FIG. 4 includes an encoder part and a decoder part. The encoder part may include a convolutional layer 1 and a convolutional layer 2, and the decoder part includes a convolutional layer 3, a convolutional layer 4, a fully connected layer 1, and a fully connected layer 2. Input sizes of the convolutional layer 1 and the convolutional layer 2 of the encoder part are both $2N \times 1$, a size (size) of a convolutional kernel is $N \times 1$, and a convolutional stride (stride) is N, where N is a quantity of antennas.

The convolutional layer 1 includes a total of R convolutional kernels (where for example, a convolutional kernel may be implemented by a filter), parameters of the convolutional kernels may be different, and R is a quantity of radio frequency channels. It may be learned from the foregoing parameters that, after data in a training signal is input into the encoder part, an output size of each convolutional kernel of the convolutional layer 1 is 2, where a first size implements multiplication of a real part of an $r^{th}$ row of a measurement matrix by a real part of an input vector, and a second size implements multiplication of the real part of the $r^{th}$ row of the measurement matrix by an imaginary part of the input vector. An output size of each convolutional kernel of the convolutional layer 2 is 2, where the first size implements multiplication of an imaginary part of the $r^{th}$ row of the measurement matrix by the real part of the input vector, the second size implements multiplication of the imaginary part of the $r^{th}$ row of the measurement matrix by the imaginary part of the input vector and a multiplication result is a negative value, and r is less than or equal to R. A real part of measured data y is obtained by adding a result of the first size output by the convolutional layer 1 to a result of the second size output by the convolutional layer 2; and an imaginary part of the measured data y is obtained by adding a result of the second size output by the convolutional layer 1 to a result of the first size output by the convolutional layer 2. A measured training signal y is input into the decoder part. An input of the convolutional layer 3 in the decoder part is two groups of vectors whose sizes are R×1. The two groups of vectors are equivalent to two channels, each channel is calculated by using 32 convolutional kernels whose sizes are 3×1, and calculation results of the two channels are added as an output. An input of the convolutional layer 4 is 32 groups of vectors whose sizes are R×1. The 32 groups of vectors are equivalent to 32 channels, each channel is calculated by using 32 convolutional kernels whose sizes are 3×1, and calculation results of the 32 channels are added as an output. An output size is 32 groups of vectors whose sizes are R×1. The output is reconstructed into a one-dimensional vector and then sent to a fully connected layer. The fully connected layer 2 outputs an angle domain channel $\hat{\mathbf{x}}$ that is obtained through estimation based on the measured data y, to estimate a mean square error (mean square error, MSE) between the obtained angle domain channel information $\hat{\mathbf{x}}$ and a label x.

$$MSE = \frac{1}{n}\sum_{i=1}^{n}\left\| \mathrm{x}_i - \hat{\mathrm{x}}_i \right\|^2$$

$\|\mathbf{x}_i - \hat{\mathbf{x}}_i\|$ represents a norm of $\mathbf{x}_i - \hat{\mathbf{x}}_i$. A first device adjusts weights of the convolutional layer and the fully connected layer based on a calculation result of the mean square error. The mean square error MSE between $\hat{\mathbf{x}}$ and x is used as a loss function, and the autoencoder model is trained by using a stochastic gradient descent algorithm until the loss function converges, to obtain a trained model as an angle domain channel inference model (namely, a first model) corresponding to a first coverage area. However, this application is not limited thereto.

According to the foregoing solution, the first device trains channel information models of different coverage areas based on training data in a channel environment. This increases a matching degree between a model and a coverage area, and improves accuracy of channel estimation performed by the model.

In this application, division of a plurality of coverage areas of the first device may include but is not limited to the following manners.

Manner 1: One coverage area of the plurality of coverage areas is a sector covered by a center angle using the first device as a center of a circle.

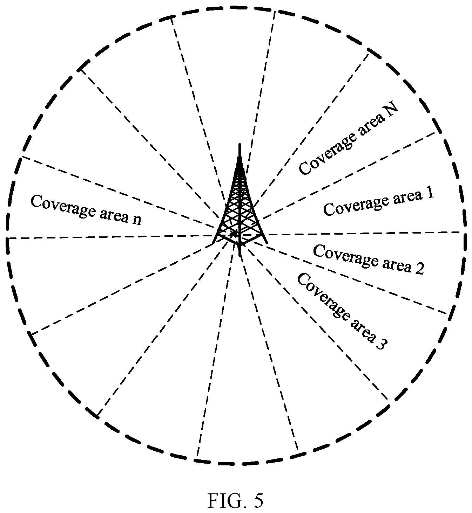

For example, FIG. 5 is a schematic diagram of a plurality of coverage areas of a first device. Each coverage area corresponds to a center angle range, and the center angle may also be referred to as a horizontal azimuth. Table 1 is an example of ranges of horizontal azimuths of the plurality of coverage areas. As shown in Table 1, a range of a horizontal azimuth included in a coverage area 1 is $0 \le \theta < \theta_1$, a range of a horizontal azimuth included in a coverage area 2 is $\theta_1 \le \theta < \theta_2$, and so on. However, this application is not limited thereto. Optionally, values of center angles of any two coverage areas of the plurality of coverage areas may be equal.

For example, if a center angle of each coverage area is $\beta$, coverage of the first device may include $\left\lceil 2\pi/\beta \right\rceil$ coverage areas.

For example, $\beta$ may be 5°, 10°, or the like. However, this application is not limited thereto. Values of center angles of two coverage areas of the plurality of coverage areas may be different. For example, the first device may divide, based on a channel feature, center angle ranges with high channel correlation into a same coverage area. Therefore, the values of the coverage center angles of the two coverage areas of the plurality of coverage areas may be different.

**Table 1**

| Coverage area identifier | Horizontal azimuth ($\theta$) |
|---|---|
| 1 | $0 \leq \theta < \theta_1$ |
| 2 | $\theta_1 \leq \theta < \theta_2$ |
| ... | ... |

Manner 2: One coverage area of the plurality of coverage areas belongs to a sector covered by a center angle using the first device as a center of a circle, where any two coverage areas belong to different sectors, or distances between any two coverage areas and the first device are different.

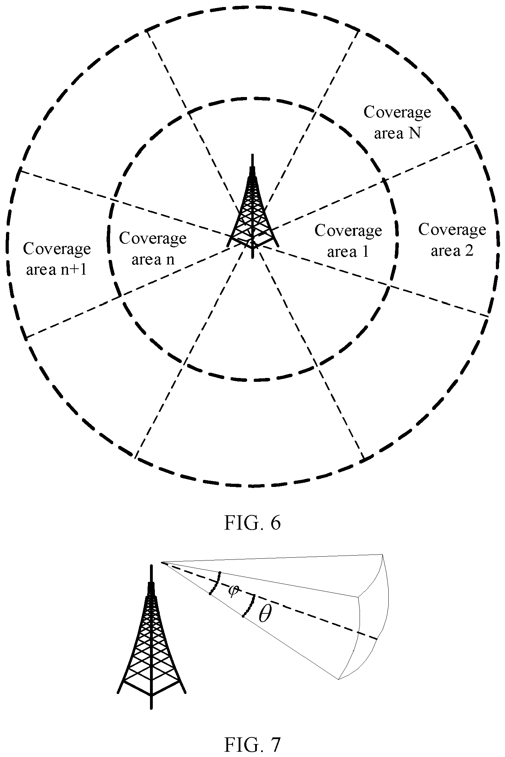

For example, FIG. 6 is another schematic diagram of a plurality of coverage areas of a first device. As shown in FIG. 6, any two coverage areas belong to different sectors, or distances between any two coverage areas and the first device are different. For example, in FIG. 6, a coverage area 1 and a coverage area 2 belong to a same sector, but a distance between the coverage area 1 and the first device is different from a distance between the coverage area 2 and the first device. In addition, the distance between the coverage area 2 and the first device is the same as a distance between a coverage area N and the first device, but the coverage area 2 and the coverage area N belong to different sectors. Table 2 is an example of a range of a horizontal azimuth $\theta$ of a coverage area and a range of a distance d. As shown in Table 2, the coverage area 1 includes that a range of the distance between the coverage area 1 and the first device is $0 \leq d < d_1$, and that a range of a horizontal azimuth is $0 \leq \theta < \theta_1$. The coverage area 2 includes that a range of the distance between the coverage area 2 and the first device is $d_1 \leq d < d_2$, and that a range of a horizontal azimuth is $0 \leq \theta < \theta_1$. The coverage area 1 includes that a range of a distance between the coverage area 1 and the first device is $0 \leq d < d_1$, and that a range of a horizontal azimuth is $\theta_1 \leq \theta < \theta_2$. However, this application is not limited thereto. It should be noted that Table 2 is merely an example, and the coverage area may alternatively be determined based on a distance range table shown in Table 3 and a horizontal azimuth range table shown in Table 4. This is not limited in this application.

**Table 2**

| Coverage area identifier | Distance (d) | Horizontal azimuth ($\theta$) |
|---|---|---|
| 1 | $0 \leq d < d_1$ | $0 \leq \theta < \theta_1$ |
| 2 | $d_1 \leq d < d_2$ | |
| 3 | $0 \leq d < d_1$ | $\theta_1 \leq \theta < \theta_2$ |
| 4 | $d_1 \leq d < d_2$ | |
| ... | ... | ... |

**Table 3**

| Coverage area identifier | Distance (d) |
|---|---|
| 1 | $0 \leq d < d_1$ |
| 2 | $d_1 \leq d < d_2$ |
| 3 | $0 \leq d < d_1$ |
| 4 | $d_1 \leq d < d_2$ |

**Table 4**

| Coverage area identifier | Horizontal azimuth ($\theta$) |
|---|---|
| 1 | $0 \leq \theta < \theta_1$ |
| 2 | |

(continued)

| Coverage area identifier | Horizontal azimuth ($\theta$) |
|---|---|
| 3 | $\theta_1 \leq \theta < \theta_2$ |
| 4 | |
| ... | ... |

Manner 3: One coverage area of the plurality of coverage areas is an area determined based on a horizontal azimuth and a vertical azimuth that use the first device as a center of a circle.

For example, FIG. 7 is a schematic diagram of one coverage area. The coverage area shown in FIG. 7 is an area determined based on a horizontal azimuth $\theta$ and a vertical azimuth $\varphi$. A range of the horizontal azimuth $\varphi$ of the coverage area may be shown in Table 4, and a range of the vertical azimuth may be shown in Table 5. For example, it may be determined based on Table 4 that a range of a horizontal azimuth $\theta$ of a coverage area 3 is $\theta_1 \leq \theta < \theta_2$, and it may be determined based on Table 5 that a range of a vertical azimuth $\varphi$ of the coverage area 3 is $\varphi_2 \leq \varphi < \varphi_3$. For the vertical azimuth of the coverage area, ranges of vertical azimuths of the plurality of coverage areas may be divided from a range of a vertical azimuth of the first device from 0° to 180°. For example, in a specific implementation, when the first device is on a horizontal plane, the ranges of the vertical azimuths of the plurality of coverage areas may be divided from the range of the vertical azimuth from 0° to 180°. Alternatively, when the first device is elevated, for example, elevated on a mountain with a high altitude or on a high-rise building, the ranges of the vertical azimuths of the plurality of coverage areas may be divided from a range of a vertical azimuth from 0 to 360°. When the vertical azimuth is about 90°, the coverage area may be a coverage area in which the first device communicates with a device such as an airplane or a satellite. However, this application is not limited thereto. In addition, the vertical azimuths of the plurality of coverage areas may be evenly divided, or values of the vertical azimuths, of the plurality of coverage areas, that are obtained through division based on different channel features may be different. This is not limited in this application. The horizontal azimuth of the coverage area is similar to that in Manner 1. For brevity, details are not described herein again.

**Table 5**

| Coverage area identifier | Vertical azimuth ($\varphi$) |
|---|---|
| 1 | $0 \leq \varphi < \varphi_1$ |
| 2 | $\varphi_1 \leq \varphi < \varphi_2$ |
| 3 | $\varphi_2 \leq \varphi < \varphi_3$ |
| 4 | $\varphi_3 \leq \varphi < \varphi_4$ |
| ... | ... |

The following describes an optional implementation in which the first device determines that the second device is in the first coverage area.

Implementation 1

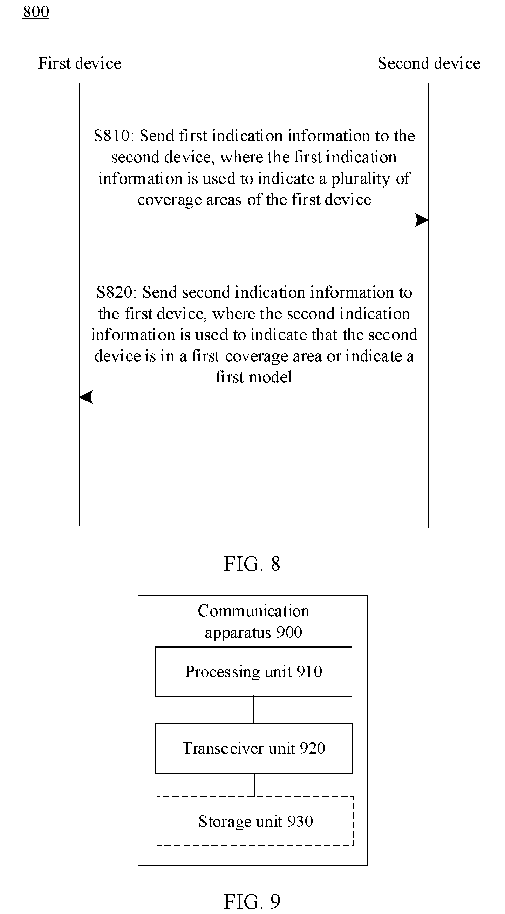

FIG. 8 is another schematic flowchart of a communication method according to this application.

S810: A first device sends first indication information to a second device, where the first indication information indicates a plurality of coverage areas of the first device, and the plurality of coverage areas correspond to a plurality of channel information inference models.

Correspondingly, the second device obtains the first indication information from the first device. Optionally, the first indication information may be broadcast information. In other words, the first indication information can be received by a plurality of devices communicating with the first device.

Optionally, the first indication information includes positioning information of boundaries of each coverage area of the plurality of coverage areas.

For example, the positioning information may be global positioning system (global positioning system, GPS) information, and the plurality of coverage areas of the first device may be shown in FIG. 5. The first indication information includes an identifier (identifier, ID) of each coverage area and GPS information of two boundaries of the coverage area corresponding to the ID. For example, the first indication information includes {GPS 0, GPS 1, ID 1, GPS 2, GPS 3, ID 2}, and the like. First two pieces of GPS information of an ID are GPS information of two boundaries of a coverage area identified by the ID, and GPS information of two boundaries of a coverage area 1 identified by the ID 1 is the GPS 0 and the GPS 1. After receiving the first indication information, the second device may separately determine horizontal azimuths of boundaries of a first coverage area based on the GPS 0 and the GPS 1. In this case, a range of the first coverage area is a range between a horizontal azimuth determined by the GPS 0 and a horizontal azimuth determined by the GPS 1. The second device may determine each coverage area in this manner based on the first indication information, to determine a coverage area in which the second device is, namely, the first coverage area.

Optionally, the first indication information further includes identification information of each coverage area and/or identification information of a model corresponding to each coverage area.

After determining the first coverage area in which the second device is located, the second device may indicate, in S820 based on second indication information, identification information of the first coverage area, or indicate identification information of a model corresponding to the first coverage area.

S820: The second device sends the second indication information to the first device, where the second indication information indicates that the second device is in the first coverage area or indicate a first model.

Correspondingly, the first device receives the second indication information from the second device. After determining, in S810, the first coverage area in which the second device is located, the second device may notify, in S820, the first device of the identification information of the first coverage area based on the second indication information, so that the first device determines, based on the identification information of the first coverage area, to process an obtained signal from the second device based on the first model corresponding to the first coverage area. Alternatively, if the second device determines, in S810, the identification information of the model corresponding to the coverage area in which the second device is located, the second device may notify the first device of identification information of the first model based on the second indication information. The first device may determine, based on an identifier of the first model in the second indication information, to process an obtained signal from the second device based on the first model.

Implementation 2

The first device may obtain location information from the second device, and determine, based on the location information, that the second device is in the first coverage area.

Based on the solutions of this application, performance of the method provided in this application is compared with, by experiments, performance of a conventional channel estimation method. Experimental parameters include: A quantity of antennas N=128, a center angle range of one coverage area is $\beta = 5°$, a signal noise ratio (signal noise ratio, SNR) is 20 dB, a quantity of radio frequency channels R=32, and R=16, an experimental result is a normalized mean square error (normalized mean square error, NMSE) of channel estimation, $\Phi_A$ in Table 6 is a conventional Zadoff-Chu measurement matrix, and $\Phi_B$ is a measurement result obtained through inference based on the first model. In an experiment, received signals are measured (or referred to as processed) based on measurement matrices $\Phi_A$ and $\Phi_B$, and NMSE results of channel estimation that is performed on the measured received signals by using sparse bayesian learning (sparse bayesian learning, SBL), orthogonal matching pursuit (orthogonal matching pursuit, OMP), and variational bayesian inference (variational bayesian inference, VBI) algorithms are compared with NMSEs of channel estimation that is performed, based on the first model in this application, on the measured received signals that are respectively obtained based on the measurement matrices $\Phi_A$ and $\Phi_A$.

It may be learned from Table 6 that, by comparing results in a same row in Table 6, when a same channel estimation algorithm and a same quantity R of radio frequency channels are used, the NMSE result of channel estimation of the signal measured based on $\Phi_B$ is less than the NMSE of channel estimation of the signal measured based on $\Phi_A$. It may be learned that channel estimation performance in a case in which the measurement matrix $\Phi_B$ obtained based on the first model in this application is applied is better than channel estimation performance in a case in which the Zadoff-Chu measurement matrix is applied. For results in a same column in Table 6, when a same measurement matrix is used, an NMSE result, of channel information, that is obtained through inference of the first model is clearly better than channel estimation performance of conventional channel estimation algorithms SBL, OMP, and VBI. When a channel information inference model that corresponds to a coverage area and that is provided in this application is used for both a measurement matrix and channel estimation, that is, by comparing results of the last two columns in the last row in Table 6 with other results, channel estimation performance of the method provided in this application is significantly better than that of a conventional algorithm.

**Table 6**

| Algorithm | NMSE of channel estimation based on $\Phi_A$ | | NMSE of channel estimation based on $\Phi_B$ | |
|---|---|---|---|---|
| | R=32 | R=16 | R=32 | R=16 |
| SBL | 0.26451 | 0.77069 | 0.13208 | - |
| OMP | 0.49256 | 1.42030 | 0.03176 | 0.08715 |
| VBI | 0.00217 | 0.76062 | 0.00148 | 0.00330 |
| First model | 0.00107 | 0.01897 | 0.00025 | 0.00076 |

According to this application, coverage of a signal receiving device is divided into a plurality of coverage areas by using a sparse feature of angle domain channel information, and the signal receiving device infers, based on a coverage area in which a signal sending device is located, a received signal by using an artificial intelligence inference model corresponding to the coverage area, to obtain channel information. This can improve signal receiving accuracy, and therefore improve communication reliability.

The methods provided in embodiments of this application are described above in detail with reference to FIG. 2 to FIG. 8. The following describes in detail an apparatus provided in embodiments of this application. To implement functions in the methods provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed in a form of the hardware structure, the software module, or a combination of the hardware structure and the software module depends on particular applications and design constraint conditions of the technical solutions.

FIG. 9 is a schematic block diagram of a communication apparatus according to an embodiment of this application. As shown in FIG. 9, the communication apparatus 900 may include a processing unit 910 and a transceiver unit 920.

In a possible design, the communication apparatus 900 may correspond to the first device in the foregoing method embodiments, or may be a chip configured in (or used in) the first device, or may be another apparatus, module, circuit, unit, or the like that can implement the method performed by the first device.

Optionally, the first device may be a network device or a terminal device. It should be understood that the communication apparatus 900 may correspond to the first device in the method 300 and the method 800 in embodiments of this application. The communication apparatus 900 may include units configured to perform the methods performed by the first device in the method 300 and the method 800 in FIG. 3 and FIG. 8. In addition, the units in the communication apparatus 900 and the foregoing other operations and/or functions are separately intended to implement corresponding procedures of the method 300 and the method 800 in FIG. 3 and FIG. 8.

When the communication apparatus 900 is configured to implement the corresponding procedure performed by the first device in the foregoing method embodiments, the transceiver unit 920 is configured to obtain a first signal from a second device; and the processing unit 910 is configured to infer the first signal based on a first model to obtain first channel information.

In some possible implementations, the processing unit 910 is specifically configured to: obtain measurement information through inference based on the first model; process the first signal based on the measurement information to obtain a second signal; and infer the second signal based on the first model to obtain the first channel information.

In some possible implementations, the processing unit 910 is specifically configured to obtain the measurement information through inference based on an encoder part; and infer the second signal based on a decoder part to obtain the first channel information.

In some possible implementations, before the transceiver unit 920 obtains the first signal from the second device, the transceiver unit 920 is further configured to obtain a first training set of a first coverage area, where the first training set includes a plurality of training signals; and the processing unit 910 is further configured to train a training model based on the first training set to obtain the first model.

In some possible implementations, the training model includes an encoder part and a decoder part, and the processing unit 910 is specifically configured to: input an angle domain channel information sample in the first training set into the encoder part to obtain a target encoded signal, and input the target encoded signal into the decoder part to obtain a target decoded signal. Then, the processing unit 910 obtains parameter information of the training model based on an angle domain channel information label and the target decoded signal, and adjusts a parameter of the encoder part and a parameter of the decoder part based on the parameter information.

In some possible implementations, the transceiver unit 920 is further configured to obtain location information from the second device; and the processing unit 910 is further configured to determine, based on the location information, that the second device is in the first coverage area.

It should be further understood that, when the communication apparatus 900 is the chip configured in (or used in) the first device, the transceiver unit 920 in the communication apparatus 900 may be an input/output interface or a circuit in the chip, and the processing unit 910 in the communication apparatus 900 may be a logic circuit in the chip. In another possible design, the communication apparatus 900 may correspond to the second device in the foregoing method embodiments, for example, a chip configured in (or used in) the second device, or may be another apparatus, module, circuit, unit, or the like that can implement the method performed by the second device.

The second device is a device that communicates with the first device through a radio link. Optionally, the second device may be a network device or a terminal device.

It should be understood that the communication apparatus 900 may correspond to the second device in the method 300 and the method 800 in embodiments of this application. The communication apparatus 900 may include units configured to perform the methods performed by the second device in the method 300 and the method 800 in FIG. 3 and FIG. 8. In addition, the units in the communication apparatus 900 and the foregoing other operations and/or functions are separately intended to implement corresponding procedures of the method 300 and the method 800 in FIG. 3 and FIG. 8.

When the communication apparatus 900 is configured to implement the corresponding procedure performed by the second device in the foregoing method embodiments, the transceiver unit 920 is configured to obtain first indication information; and the processing unit 910 is configured to determine a first coverage area based on the first indication information, where the transceiver unit 920 is further configured to send second indication information.

It should be further understood that, when the communication apparatus 900 is the chip configured in (or used in) the second device, the transceiver unit 920 in the communication apparatus 900 may be an input/output interface or a circuit in the chip, and the processing unit 910 in the communication apparatus 900 may be a logic circuit in the chip. Optionally, the communication apparatus 900 may further include a storage unit 930. The storage unit 930 may be configured to store instructions or data. The processing unit 910 may execute the instructions or the data stored in the storage unit, so that the communication apparatus implements a corresponding operation.

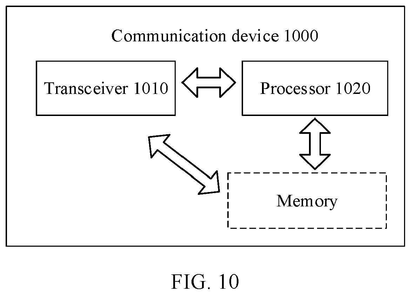

It should be understood that the transceiver unit 920 in the communication apparatus 900 may be implemented through a communication interface (for example, a transceiver or an input/output interface), and the transceiver unit 920, for example, may correspond to a transceiver 1010 in a communication device 1000 shown in FIG. 10. The processing unit 910 in the communication apparatus 900 may be implemented through at least one processor, and the processing unit 910, for example, may correspond to a processor 1020 in the communication device 1000 shown in FIG. 10. The processing unit 910 in the communication apparatus 900 may alternatively be implemented through at least one logic circuit. The storage unit 930 in the communication apparatus 900 may correspond to a memory in the communication device 1000 shown in FIG. 10.

It should be further understood that a specific process in which the units perform the foregoing corresponding steps is described in detail in the foregoing method embodiments. For brevity, details are not described herein again.

FIG. 10 is a schematic diagram of a structure of a terminal device 1000 according to an embodiment of this application.

The communication device 1000 may correspond to the first device in the foregoing method embodiments. As shown in FIG. 10, the first device 1000 includes a processor 1020 and a transceiver 1010. Optionally, the first device 1000 further includes a memory.

The processor 1020, the transceiver 1010, and the memory may communicate with each other through an internal connection path, and transmit a control signal and/or a data signal. The memory is configured to store a computer program, and the processor 1020 is configured to execute the computer program in the memory, to control the transceiver 1010 to receive and send a signal.

It should be understood that, the communication device 1000 shown in FIG. 10 can implement processes related to the first device in the method embodiments shown in FIG. 3 and FIG. 8. Operations and/or functions of modules in the first device 1000 are separately intended to implement corresponding procedures in the foregoing method embodiments. For details, refer to the descriptions in the foregoing method embodiments. To avoid repetition, detailed descriptions are properly omitted herein.

The communication device 1000 may correspond to the second device in the foregoing method embodiment. As shown in FIG. 10, the second device 1000 includes a processor 1020 and a transceiver 1010. Optionally, the second device 1000 further includes a memory. The processor 1020, the transceiver 1010, and the memory may communicate with each other through an internal connection path, and transmit a control signal and/or a data signal. The memory is configured to store a computer program, and the processor 1020 is configured to execute the computer program in the memory, to control the transceiver 1010 to receive and send a signal.

It should be understood that, the communication device 1000 shown in FIG. 10 can implement processes related to the second device in the method embodiments shown in FIG. 3 and FIG. 8. Operations and/or functions of modules in the second device 1000 are separately intended to implement corresponding procedures in the foregoing method embodiments. For details, refer to the descriptions in the foregoing method embodiments. To avoid repetition, detailed descriptions are properly omitted herein.

The first device may correspond to the terminal device in the system shown in FIG. 1, and the second device corresponds to the network device in the system shown in FIG. 1. Alternatively, the first device may correspond to the network device in the system shown in FIG. 1, and the second device corresponds to the terminal device in the system shown in FIG. 1.

The processor 1020 and the memory may be integrated into one processing apparatus, and the processor 1020 is configured to execute program code stored in the memory to implement the foregoing functions. During specific implementation, the memory may alternatively be integrated into the processor 1020, or may be independent of the processor 1020. The processor 1020 may correspond to the processing unit in FIG. 9.

The transceiver 1010 may correspond to the transceiver unit in FIG. 9. The transceiver 1010 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the communication device 1000 shown in FIG. 10 can implement the processes related to the terminal device in the method embodiments shown in FIG. 3 and FIG. 8. The operations and/or the functions of the modules in the terminal device 1000 are separately intended to implement corresponding procedures in the foregoing method embodiments. For details, refer to the descriptions in the foregoing method embodiments. To avoid repetition, detailed descriptions are properly omitted herein.

An embodiment of this application further provides a processing apparatus, and the processing apparatus includes a processor and a (communication) interface. The processor is configured to perform the method according to any one of the foregoing method embodiments.

It should be understood that, the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the methods in the embodiments shown in FIG. 3 and FIG. 8.

All or a part of the technical solutions provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, a terminal device, a core network device, a machine learning device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center that integrates one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in embodiments of this application, this application further provides a computer-readable storage medium. The computer-readable storage medium stores program code. When the program code is run by one or more processors, an apparatus including the processor is enabled to perform the methods in the embodiments shown in FIG. 3 and FIG. 8.

According to the methods provided in embodiments of this application, this application further provides a system. The system includes the foregoing one or more first devices. Further, the system may include the foregoing one or more second devices.

Optionally, the first device may be a network device or a terminal device, and the second device may be a device that communicates with the first device through a radio link.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    obtaining, by a first device, a first signal from a second device; and
    inferring, by the first device, the first signal based on a first model to obtain first channel information, wherein the second device is in a first coverage area of a plurality of coverage areas of the first device, and the first model is a channel information inference model corresponding to the first coverage area.

2. The method according to claim 1, wherein the first channel information is angle domain channel information.

3. The method according to claim 1 or 2, wherein the inferring the first signal based on a first model to obtain first channel information comprises:

    obtaining measurement information through inference based on the first model;
    processing the first signal based on the measurement information to obtain a second signal; and
    inferring the second signal based on the first model to obtain the first channel information.

4. The method according to any one of claims 1 to 3, wherein before the obtaining, by a first device, a first signal from a second device, the method further comprises:

    obtaining, by the first device, a first training set of the first coverage area, wherein the first training set comprises a plurality of training signals; and
    training, by the first device, a training model based on the first training set to obtain the first model.

5. The method according to any one of claims 1 to 4, wherein one coverage area of the plurality of coverage areas belongs to a sector covered by a center angle using the first device as a center of a circle, the first coverage area belongs to a sector covered by a first center angle, and any two coverage areas of the plurality of coverage areas belong to different sectors, or distances between any two coverage areas of the plurality of coverage areas and the first device are different.

6. The method according to any one of claims 1 to 5, wherein the method further comprises:

    obtaining, by the first device, location information from the second device; and
    determining, by the first device based on the location information, that the second device is in the first coverage area.

7. The method according to claim 6, wherein the method further comprises:

    sending, by the first device, first indication information, wherein the first indication information indicates the plurality of coverage areas, and the plurality of coverage areas correspond to a plurality of channel information inference models; and

obtaining, by the first device, second indication information, wherein the second indication information indicates that the second device is in the first coverage area or indicate the first model.

8. A communication method, wherein the method further comprises:

obtaining, by a second device, first indication information, wherein the first indication information indicates a plurality of coverage areas, and the plurality of coverage areas correspond to a plurality of channel information inference models; and

sending, by the second device, second indication information, wherein the second indication information indicates that the second device is in a first coverage area or indicate a first model, the first coverage area is one of the plurality of coverage areas, and the first model is a model corresponding to the first coverage area.

9. The method according to claim 8, wherein one coverage area of the plurality of coverage areas belongs to a sector covered by a center angle using a first device as a center of a circle, the first coverage area belongs to a sector covered by a first center angle, and two coverage areas of the plurality of coverage areas belong to different sectors, or distances between two coverage areas of the plurality of coverage areas and the first device are different.

10. The method according to claim 8 or 9, wherein the first indication information comprises one or more of the following items:

reference location information of each coverage area of the plurality of coverage areas, identification information of each coverage area of the plurality of coverage areas, or identification information of each model of the plurality of channel information inference models.

11. The method according to any one of claims 8 to 10, wherein the second indication information comprises identification information of the first coverage area or identification information of the first model.

12. A communication apparatus, wherein the communication apparatus is configured in a first device and comprises:

a transceiver unit, configured to obtain a first signal from a second device; and

a processing unit, configured to infer the first signal based on a first model to obtain first channel information, wherein the second device is in a first coverage area of a plurality of coverage areas of the first device, and the first model is a channel information inference model corresponding to the first coverage area.

13. The apparatus according to claim 12, wherein the first channel information is angle domain channel information.

14. The apparatus according to claim 12 or 13, wherein the processing unit is specifically configured to:

obtain measurement information through inference based on the first model;

process the first signal based on the measurement information to obtain a second signal; and

infer the second signal based on the first model to obtain the first channel information.

15. The apparatus according to any one of claims 12 to 14, wherein before the transceiver unit obtains the first signal from the second device,

the transceiver unit is further configured to obtain a first training set of the first coverage area, wherein the first training set comprises a plurality of training signals; and

the processing unit is further configured to train a training model based on the first training set to obtain the first model.

16. The apparatus according to any one of claims 12 to 15, wherein one coverage area of the plurality of coverage areas belongs to a sector covered by a center angle using the first device as a center of a circle, the first coverage area belongs to a sector covered by a first center angle, and any two coverage areas of the plurality of coverage areas belong to different sectors, or distances between any two coverage areas of the plurality of coverage areas and the first device are different.

17. The apparatus according to any one of claims 12 to 16, wherein

the transceiver unit is further configured to obtain location information from the second device; and

the processing unit is further configured to determine, based on the location information, that the second device is in the first coverage area.

18. A communication apparatus, wherein the communication apparatus is configured in a second device and comprises:

a transceiver unit, configured to obtain first indication information, wherein the first indication information indicates a plurality of coverage areas, and the plurality of coverage areas correspond to a plurality of channel information inference models; and
a processing unit, configured to determine, based on the first indication information, that the second device is in a first coverage area of the plurality of coverage areas, wherein
the transceiver unit is further configured to send second indication information, wherein the second indication information indicates that the second device is in the first coverage area or indicate a first model, and the first model is a model corresponding to the first coverage area.

19. The apparatus according to claim 18, wherein one coverage area of the plurality of coverage areas belongs to a sector covered by a center angle using a first device as a center of a circle, the first coverage area belongs to a sector covered by a first center angle, and two coverage areas of the plurality of coverage areas belong to different sectors, or distances between two coverage areas of the plurality of coverage areas and the first device are different.

20. The apparatus according to claim 18 or 19, wherein the first indication information comprises one or more of the following items:
reference location information of each coverage area of the plurality of coverage areas, identification information of each coverage area of the plurality of coverage areas, or identification information of each model of the plurality of channel information inference models.

21. The apparatus according to any one of claims 18 to 20, wherein the second indication information comprises identification information of the first coverage area or identification information of the first model.

22. A communication apparatus, comprising at least one processor coupled to a memory, wherein

the memory is configured to store a program or instructions; and
the at least one processor is configured to execute the program or the instructions, so that the apparatus implements the method according to any one of claims 1 to 11.

23. A chip, comprising at least one logic circuit and an input/output interface, wherein
the input/output interface is configured to input a first signal from a second device; and the logic circuit is configured to infer the first signal based on a first model to obtain first channel information, wherein the second device is in a first coverage area of a plurality of coverage areas of a first device, and the first model is a channel information inference model corresponding to the first coverage area.

24. A chip, comprising at least one logic circuit and an input/output interface, wherein

the input/output interface is configured to obtain first indication information, wherein the first indication information indicates a plurality of coverage areas, and the plurality of coverage areas correspond to a plurality of channel information inference models; and
the logic circuit is configured to determine, based on the first indication information, that a second device is in a first coverage area of the plurality of coverage areas; and the input/output interface is further configured to send second indication information, wherein the second indication information indicates that the second device is in the first coverage area or indicate a first model, the first coverage area is one of the plurality of coverage areas, and the first model is a model corresponding to the first coverage area.

25. A computer-readable storage medium, wherein the computer-readable storage medium stores instructions; and when the instructions are run on a computer, the computer is enabled to perform the method according to any one of claims 1 to 11.

26. A computer program product, comprising instructions, wherein when the instructions are run on a computer, the computer is enabled to perform the method according to any one of claims 1 to 11.

FIG. 1

FIG. 2

300

S310: Obtain a first signal from a second device

S320: Infer the first signal based on a first model to obtain first channel information

FIG. 3

Re($\hat{\mathbf{x}}$)
Im($\hat{\mathbf{x}}$)

Decoder part

Fully connected layer 2

Fully connected layer 1

Convolutional layer 4

Convolutional layer 3

Re(y)
Im(y)

Update a weight

Mean square error

FIG. 4

Encoder part

Convolutional layer 2

Convolutional layer 1

Re($\mathbf{a}$)
Im($\mathbf{a}$)

Training signal

Data a
Label x

FIG. 5

FIG. 6

FIG. 7

800

| First device |   | Second device |

S810: Send first indication information to the second device, where the first indication information is used to indicate a plurality of coverage areas of the first device

S820: Send second indication information to the first device, where the second indication information is used to indicate that the second device is in a first coverage area or indicate a first model

FIG. 8

Communication
apparatus 900

Processing unit 910

Transceiver unit 920

Storage unit 930

FIG. 9

FIG. 10

## INTERNATIONAL SEARCH REPORT

| | International application No. |
|---|---|
| | **PCT/CN2021/131856** |

**A. CLASSIFICATION OF SUBJECT MATTER**

H04B 17/391(2015.01)i; H04L 25/02(2006.01)i

According to International Patent Classification (IPC) or to both national classification and IPC

**B. FIELDS SEARCHED**

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

USTXT; EPTXT; WOTXT; CNTXT; CNABS; VEN; CNKI; 3GPP: 覆盖区域, 子小区, 扇区, 子区, 扇形区, 网格, 栅格, 边界, 角度域, 角域, 信道信息, 方向角, 方位角, 波达角, 模型, 神经网络, coverage, boundary, borderline, area, sector, NN, neural network, neural net, channel information, angle domain, angle, DOA, model

**C. DOCUMENTS CONSIDERED TO BE RELEVANT**

| Category* | Citation of document, with indication, where appropriate, of the relevant passages | Relevant to claim No. |
|---|---|---|
| X | CN 110113088 A (SOUTHEAST UNIVERSITY) 09 August 2019 (2019-08-09)<br>description paragraphs [0045], [0059]-[0083] | 1-5, 12-16,<br>22, 23, 25, 26 |
| Y | CN 110113088 A (SOUTHEAST UNIVERSITY) 09 August 2019 (2019-08-09)<br>description paragraphs [0045], [0059]-[0083] | 6-11, 17-22, 24-26 |
| Y | CN 110035388 A (PING AN TECHNOLOGY (SHENZHEN) CO., LTD.) 19 July 2019<br>(2019-07-19)<br>description paragraphs [0032]-[0041], [0053]-[0057] | 6-11, 17-22, 24-26 |
| A | CN 111478783 A (CHINA MOBILE COMMUNICATION LTD., RESEARCH INSTITUTE<br>et al.) 31 July 2020 (2020-07-31)<br>description, paragraphs [0111]-[0122] | 1-26 |
| A | WO 2014022964 A1 (HUAWEI TECHNOLOGIES CO., LTD. et al.) 13 February 2014<br>(2014-02-13)<br>entire document | 1-26 |
| A | CN 106302274 A (TSINGHUA UNIVERSITY) 04 January 2017 (2017-01-04)<br>entire document | 1-26 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 December 2021** | **13 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/131856**

| Patent document cited in search report | | | Publication date (day/month/year) | Patent family member(s) | | | Publication date (day/month/year) |
|---|---|---|---|---|---|---|---|
| CN | 110113088 | A | 09 August 2019 | CN | 110113088 | B | 11 June 2021 |
| CN | 110035388 | A | 19 July 2019 | None | | | |
| CN | 111478783 | A | 31 July 2020 | None | | | |
| WO | 2014022964 | A1 | 13 February 2014 | CN | 103718582 | A | 09 April 2014 |
| CN | 106302274 | A | 04 January 2017 | CN | 106302274 | B | 09 August 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110197721